# FASCICULE DE BREVET EUROPEEN

(11) **EP 2 176 093 B1**
(45) Date de publication et mention de la délivrance du brevet: **14.11.2012**
(21) Numéro de dépôt: 08826835.4
(22) Date de dépôt: 16.07.2008
(51) Int. Cl.: B60R 19/56, B60R 19/52, B60R 19/24

(54) **BOUCLIER DE PARE-CHOCS**
STOSSFÄNGERSCHILD
BUMPER SHIELD

(30) Priorité: 16.07.2007 FR 0756520
(43) Date de publication de la demande: 21.04.2010
(73) Titulaire: Compagnie Plastic Omnium, 69007 Lyon (FR)
(72) Inventeur: DELAVALLE, Dominique, F-01160 Pont D'Ain (FR); ROUSSEL, Thierry, F-52500 Montesson (FR); MALTESTE, Stéphane, F-01800 Meximieux (FR)
(74) Mandataire: Potdevin, Emmanuel Eric
(86) Numéro de dépôt international: PCT/FR2008/051336
(87) Numéro de publication internationale: WO 2009/016302

(56) Documents cités:
- EP-A- 0 826 560
- EP-A- 1 314 614
- DE-A1-102005 053 960
- FR-A- 2 744 966
- US-A1- 2006 197 347

## Description

La présente invention concerne le domaine technique des véhicules automobiles et plus particulièrement le domaine technique des véhicules utilitaires et des véhicules de plus de 3,5 tonnes comprenant un châssis et une cabine de conduite posée sur le châssis.

Généralement, un véhicule utilitaire ou un véhicule de plus de 3,5 tonnes comprend un châssis comprenant deux longerons s'étendant longitudinalement et portant les essieux. Le châssis supporte un dispositif de pare-chocs comportant notamment une poutre de choc et un bouclier de pare-chocs.

Le véhicule utilitaire comprend encore une cabine, posée sur le châssis, la cabine supportant divers éléments de carrosserie tels que des ailes latérales, une calandre, et également des éléments fonctionnels tels qu'un bloc avant optique.

Dans l'état de la technique, la cabine est posée sur le châssis en laissant un débattement entre la cabine et le pare-chocs de manière à permettre des déplacements relatifs de la cabine et du châssis. Un tel débattement est nécessaire pour éviter l'endommagement d'éléments solidaires de la cabine ou de la cabine elle-même par écrasement de la cabine contre le châssis lors d'un déplacement intempestif de la cabine, provoqué, par exemple, par les vibrations du véhicule.

L'inconvénient est que ce débattement se traduit par un espace intercalaire apparent séparant un bouclier de pare-chocs solidaire du châssis et des éléments visibles tels qu'une calandre solidaires de la cabine, ce qui crée une discontinuité de la face avant du véhicule et dégrade son aspect général. EP 1 314 614 divulgue un ensemble pour véhicule de tourisme.

L'invention a pour but d'améliorer l'aspect général de la face avant du véhicule malgré la présence du débattement entre la cabine et le châssis.

A cet effet, l'invention a pour objet un ensemble selon la revendication 1.

Du fait que le bouclier de pare-chocs est rapporté sur la cabine aucun espace intercalaire n'apparaît entre le bouclier de pare-chocs et la cabine. En effet, le débattement entre le châssis et la cabine n'est pas apparent car au moins partiellement recouvert par le bouclier.

Par ailleurs, grâce à l'ouverture ménagée dans le bouclier, la dimension longitudinale du véhicule automobile est fixée à l'avant par la poutre de chocs solidaire du châssis, qui constitue la pièce proéminente du véhicule.

En effet, l'ouverture permet à la poutre de chocs de dépasser du bouclier vers l'avant et dans la direction longitudinale du véhicule automobile. Ainsi, le dépassement de la poutre de chocs détermine l'encombrement maximal du véhicule vers l'avant dans la direction longitudinale.

Un bouclier selon l'invention peut en outre comporter l'une ou plusieurs des caractéristiques selon lesquelles :
- le bouclier comporte encore une portion transversale liant les deux portions latérales entre elles, le bord supérieur de l'ouverture étant formé par le bord inférieur de la portion transversale ;
- la portion transversale est une calandre du véhicule automobile.

L'invention a encore pour objet un ensemble comprenant un bouclier de pare-chocs selon l'invention et une poutre de chocs, le bouclier et la poutre étant destinés à être agencés entre eux de manière à ce que le bouclier recouvre au moins partiellement la poutre de chocs.

Un ensemble selon l'invention peut en outre comporter l'une ou plusieurs des caractéristiques selon lesquelles :
- la poutre de chocs supporte, éventuellement venus de matière avec elle, des moyens d'entrée d'air tels qu'une grille d'entrée d'air, les moyens d'entrée d'air se trouvant en retrait dans la direction longitudinale du véhicule par rapport à la poutre de chocs ;
- la calandre recouvre partiellement les moyens d'entrée d'air supportés par la poutre de chocs ;
- la poutre de chocs est réalisée en matière plastique.

L'invention a enfin pour objet un véhicule automobile comprenant un ensemble selon l'invention, le véhicule automobile comprenant un organe de support d'au moins une portion du bouclier et d'au moins un élément choisi parmi un bloc avant optique et une pièce de carrosserie du véhicule automobile, cet organe de support étant rapporté sur la cabine du véhicule.

De préférence, le véhicule automobile est un véhicule utilitaire.

L'invention sera mieux comprise à la lecture de la description qui va suivre, donnée uniquement à titre d'exemple et faite en se référant aux dessins dans lesquels :
- la figure 1 est une vue en perspective de la partie avant d'un véhicule automobile comprenant un bouclier avant selon l'invention ;
- la figure 2 est une autre vue en perspective de la partie avant représentée sur la figure 1 ;
- la figure 3 est une vue schématique en coupe dans un plan vertical orthogonal à la direction transversale du véhicule automobile de la partie avant de la figure 1 ;
- la figure 4 est une vue schématique en coupe dans un plan horizontal orthogonal à une direction verticale du véhicule automobile de la partie avant de la figure 1 ;
- la figure 5 est une vue en perspective du bouclier à l'état démonté de la partie avant représentée sur la figure 1 ;
- la figure 6 est une vue éclatée en perspective de la partie avant de la figure 1.

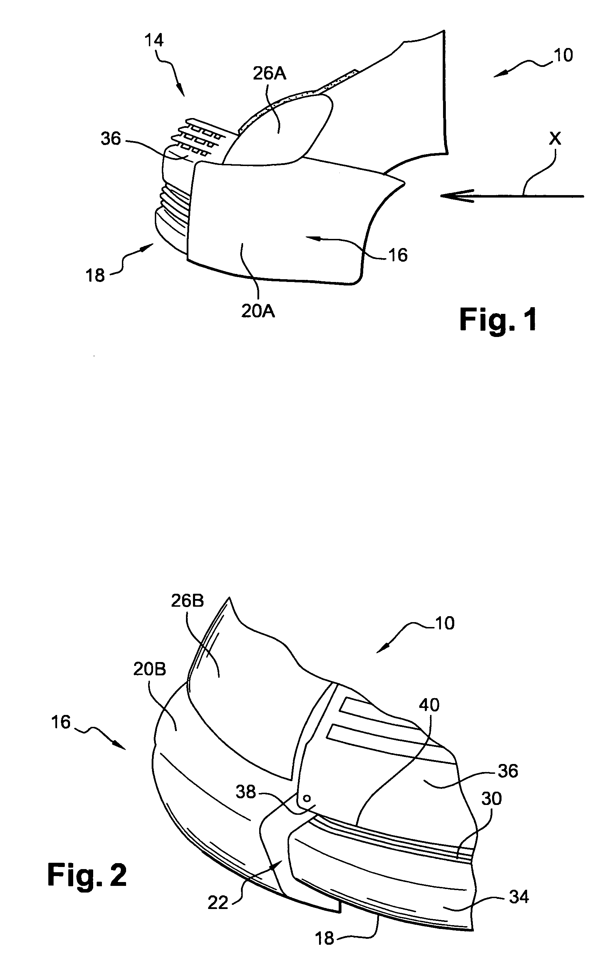

On a représenté sur les figures 1 à 4 une partie avant d'un véhicule automobile selon l'invention. Cette partie avant est désignée par la référence générale 10.

Le véhicule automobile comprend une cabine de conduite (non représentée) et un châssis, la cabine de conduite étant distincte du châssis et étant portée par ledit châssis. La cabine de conduite est fixée sur le châssis à l'aide de moyens de fixation (non représentés) tels que des vérins hydrauliques ou pneumatiques permettant d'isoler la cabine des vibrations du châssis.

Dans l'exemple décrit, le véhicule automobile est un véhicule utilitaire de moins de 3,5 tonnes. Mais l'invention s'applique également à des véhicules de type poids-lourds, c'est-à-dire ayant un poids supérieur à 3,5 Tonnes.

Le véhicule automobile comprend un ensemble 14 comprenant un bouclier de pare-chocs avant 16 rapporté sur la cabine du véhicule automobile et une poutre de chocs 18 solidaire du châssis 12, réalisée en matière plastique.

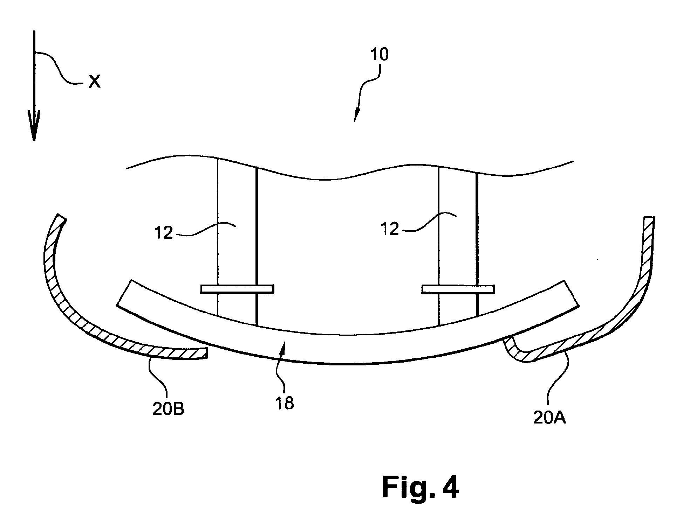

Le bouclier 16 comprend deux portions latérales gauche 20A et droite 20B formant notamment des coins de pare-chocs. Comme on le voit sur la figure 4, les deux portions latérales gauche 20A et droite 20B délimitent entre elles une ouverture 22.

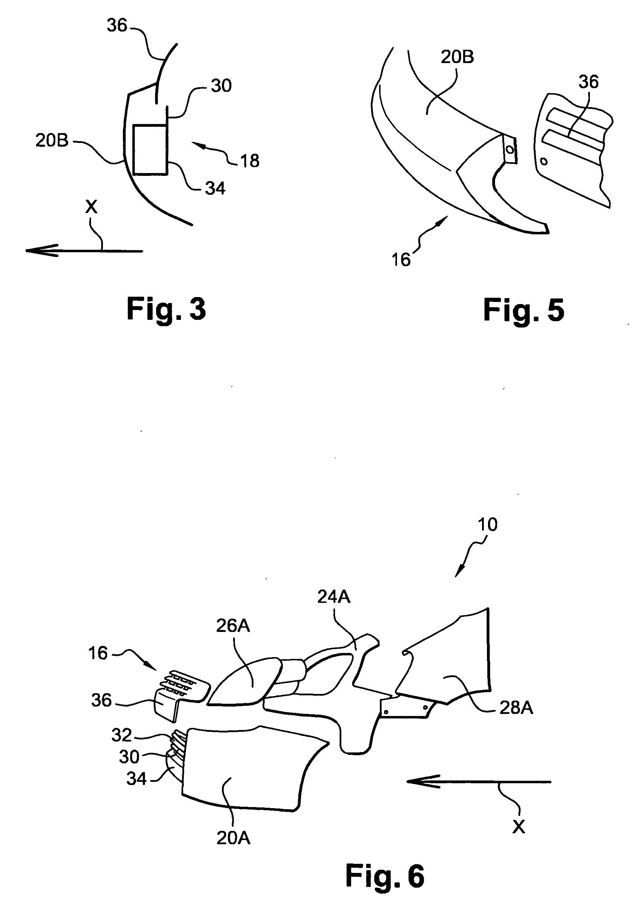

Afin d'assembler le bouclier 16 à la cabine, le véhicule automobile comprend deux organes de support gauche 24A et droit 24B destinés à porter chacun respectivement les portions latérales gauche 20A et droite 20B du bouclier 16, ainsi que d'autres éléments tels qu'un bloc avant optique 26A, 26B et une autre pièce de carrosserie du véhicule automobile, par exemple une aile 28A, 28B (figure 6). Chaque organe de support 24A, 24B est par ailleurs destiné à être rapporté sur la cabine du véhicule.

Les portions latérales 20A et 20B sont conformées de manière à ce que, une fois montées sur le véhicule, la poutre de chocs 18 solidaire du châssis 12 du véhicule puisse dépasser du bouclier 16 vers l'avant dans la direction longitudinale X de déplacement du véhicule comme cela est mieux visible sur la figure 4.

La poutre de chocs 18 est réalisée dans une pièce comprenant une partie supérieure 30 constituant des moyens d'entrée d'air 32 tels qu'une grille d'entrée d'air et une partie inférieure 34 constituant la poutre de chocs 18 proprement dite, la partie supérieure 30 étant en retrait, dans la direction longitudinale X du véhicule, par rapport à la partie inférieure 34.

Les parties supérieure 30 et inférieure 34 sont réalisées d'un seul tenant mais pourraient, dans un autre mode de réalisation, être assemblées.

Le bouclier 16 comporte encore une portion transversale 36 liant les deux portions latérales 20A et 20B entre elles, le bord supérieur 38 de l'ouverture 22 étant formé par le bord inférieur 40 de la portion transversale 36. De préférence, la portion transversale 36 est une calandre du véhicule automobile ou une portion inférieure d'une telle calandre.

La portion transversale 36 est destinée à être assemblée aux deux portions latérales 20A et 20B par des moyens de fixation classiques (voir figure 5).

Comme cela est illustré sur les figures 1 à 4, le bouclier 16 et la poutre 18 sont destinés à être agencés entre eux de manière à ce que le bouclier 16 recouvre au moins partiellement la poutre de chocs 18 tout en laissant, en grande partie, apparente la poutre de chocs 18.

Ainsi, les deux portions latérales 20A, 20B recouvrent partiellement les extrémités latérales de la poutre de chocs 18. De plus, la calandre 36 recouvre partiellement la grille 32 qui est solidaire de la poutre de chocs 18.

Nous allons maintenant décrire un exemple de montage d'un ensemble selon l'invention.

Lors de l'assemblage du véhicule automobile, les éléments fonctionnels tels que les blocs optiques avant gauche 26A et droit 26B, les ailes de carrosserie gauche 28A et droite 28B ainsi que les portions latérales 20A, 20B et transversale 36 du bouclier 16 peuvent être avantageusement pré-assemblés sur leurs organes de supports respectifs 24A et 24B.

Chaque organe de support 24A, 24B portant les divers éléments pré-assemblés est alors rapporté sur la cabine du véhicule et fixé à celle-ci. Le bouclier de pare-chocs 16 vient coiffer la grille d'entrée d'air 32 solidaire de la poutre de chocs 18, tout en laissant apparente ladite poutre de chocs qui dépasse du bouclier 16 à travers l'ouverture 22, les extrémités latérales de la poutre de chocs étant néanmoins recouvertes par les portions latérales 20A et 20B du bouclier.

On voit notamment que la poutre de chocs 18, en étant en saillie par rapport au bouclier 16 dans la zone centrale avant du véhicule, permet avantageusement de protéger la calandre 36 et les portions latérales 20A, 20B du bouclier. En effet, lors d'un choc frontal avec un obstacle, la partie inférieure 34 est la première pièce à entrer en contact avec cet obstacle, évitant ainsi l'endommagement d'autres éléments.

Bien entendu, l'invention n'est pas limitée au mode de réalisation décrit, mais par les revendications annexées.

## Revendications

1. Ensemble pour véhicule automobile ayant d'une part un châssis (12) et d'autre part une cabine de conduite portée par ledit châssis (12), l'ensemble comprenant un bouclier de pare-chocs (16) et une poutre de chocs (18), le bouclier (16) comportent deux portions latérales (20A, 20B) et est apte à être rapporté sur la cabine de sorte que les portions délimitent entre elles une ouverture (22), la cabine est posée sur le châssis (12) en laissant un débattement entre la cabine et le châssis de manière à permettre des déplacements relatifs de la cabine et du châssis (12) et en ce que : **caracterisé en ce que** ledit bouclier (16) est conformé de manière à ce que, une fois monté sur le véhicule (10), la poutre de chocs (18) solidaire du châssis (12) puisse dépasser du bouclier (16) vers l'avant dans la direction longitudinale (X) de déplacement du véhicule (10).

2. Ensemble (14) selon la revendication 1, comportant encore une portion transversale (36) liant les deux portions latérales entre elles (20A, 20B), le bord supérieur (38) de l'ouverture (22) étant formé par le bord inférieur (40) de la portion transversale (36).

3. Ensemble (14) selon la revendication 2, dans lequel la portion transversale est une calandre (36) du véhicule automobile.

4. Ensemble (14) selon l'une quelconque des revendications 1 à 3, dans lequel le bouclier (16) et la poutre (18) sont destinés à être agencés entre eux de manière à ce que le bouclier (16) recouvre au moins partiellement la poutre de chocs (18).

5. Ensemble (14) selon la revendication 4, dans lequel la poutre de chocs (18) supporte, éventuellement venus de matière avec elle, des moyens d'entrée d'air (32) tels qu'une grille d'entrée d'air et les moyens d'entrée d'air (32) se trouvant en retrait dans la direction longitudinale du véhicule par rapport à la poutre de chocs (18).

6. Ensemble (14) selon la revendication 5 comprenant un bouclier (16) selon la revendication 3, dans lequel la calandre (36) recouvre partiellement les moyens d'entrée d'air (32) de la poutre de chocs (18).

7. Ensemble (14) selon l'une quelconque des revendications précédentes, dans lequel la poutre de chocs (18) est réalisée en matière plastique.

8. Avant (10) de véhicule automobile comprenant une poutre de chocs (18), un bouclier de pare-chocs (16), un châssis (12) auquel est fixé la poutre de chocs (18) et une cabine de conduite distincte du châssis (12) et portée par ledit châssis (12), **caractérisé en ce que** le bouclier (16) et la poutre (18) font partie d'un ensemble selon l'une quelconque des revendications 1 à 7.

9. Avant (10) selon la revendication 8, comprenant un organe de support (24A, 24B) d'au moins une portion (20A, 20B, 36) du bouclier (16) et d'au moins un élément choisi parmi un bloc avant optique (26A, 26B) et une pièce de carrosserie du véhicule automobile (28A, 28B), cet organe de support (24A, 24B) étant rapporté sur la cabine du véhicule.

10. Véhicule automobile, **caractérisé en ce qu'**il comprend un avant (14) selon la revendication 9.

11. Véhicule automobile selon la revendication 10, étant un véhicule utilitaire.

12. Bouclier (16) de pare-chocs, **caractérisé en ce qu'**il fait partie d'un ensemble selon l'une quelconque des revendications 1 à 7.

## Claims

1. Assembly for motor vehicle having firstly a chassis (12) and secondly a driving cab supported by said chassis (12), the assembly comprising a bumper shield (16) and an impact beam (18), the shield (16) comprising two lateral portions (20A, 20B) and designed to be fastened to the cab such that the portions form between them an opening (22), **characterised in that** the cab is placed on the chassis (12) leaving a gap between the cab and the chassis to allow relative displacements of the cab and the chassis (12) and **in that** said shield (16) is shaped in such a way that, once mounted on the vehicle (10), the impact beam (18) fastened to the chassis (12) can project past the shield (16) forwards in the longitudinal direction (X) of the vehicle (10) displacement.

2. Assembly (14) according to claim 1, further comprising a transverse portion (36) connecting the two lateral portions (20A, 20B) together, the upper edge (38) of the opening (22) being formed by the lower edge (40) of the transverse portion (36).

3. Assembly (14) according to claim 2, wherein the transverse portion is a radiator grill (36) of the motor vehicle.

4. Assembly (14) according to any of claims 1 to 3, wherein the shield (16) and the beam (18) are intended to be positioned together so that the shield (16) covers at least partially the impact beam (18).

5. Assembly (14) according to claim 4, wherein the impact beam (18) supports, possibly being made in one piece with said beam, air inlet means (32) such as an air inlet grille and the air inlet means (32) being set back in the vehicle longitudinal direction with respect to the impact beam (18).

6. Assembly (14) according to claim 5 comprising a shield (16) according to claim 3, wherein the radiator grille (36) partially covers the air inlet means (32) of the impact beam (18).

7. Assembly (14) according to any of the preceding claims, wherein the impact beam (18) is made from plastic.

8. Motor vehicle front (10) comprising an impact beam (18), a bumper shield (16), a chassis (12) to which the impact beam (18) and a driving cab separate from the chassis (12) and supported by said chassis (12) are attached, **characterised in that** the shield (16) and the beam (18) are part of an assembly according to any of claims 1 to 7.

9. Front (10) according to claim 8, comprising a support component (24A, 24B) to support at least one portion (20A, 20B, 36) of the shield (16) and at least one element chosen amongst a front headline unit (26A, 26B) and a vehicle bodywork part (28A, 28B), this support component (24A, 24B) being attached to the vehicle cab.

10. Motor vehicle, **characterised in that** it comprises a front (14) according to claim 9.

11. Motor vehicle according to claim 10, being a utility vehicle.

12. Bumper shield (16), **characterised in that** it is part of an assembly according to any of claims 1 to 7.

## Patentansprüche

1. Baugruppe für Kraftfahrzeug, das einerseits ein Chassis (12) und andererseits ein Fahrerhaus aufweist, das von dem Chassis (12) getragen wird, wobei die Baugruppe einen Stoßfängerschild (16) und einen Stoßbalken (18) aufweist, wobei der Schild (16) zwei seitliche Abschnitte (20A, 20B) aufweist und geeignet ist, um an das Fahrerhaus derart angebaut zu werden, dass die Abschnitte zwischeneinander eine Öffnung (22) begrenzen, **dadurch gekennzeichnet, dass** das Fahrerhaus auf dem Chassis (12) gelagert ist, wobei ein Federweg zwischen dem Fahrerhaus und dem Chassis derart belassen wird, dass relative Bewegungen des Fahrerhauses und des Chassis (12) erlaubt werden, und dass der Schild (16) derart ausgebildet ist, dass der Stoßbalken (18), der fest mit dem Chassis (12) verbunden ist, nach der Montage an das Fahrzeug (10) über den Schild (16) zu der Vorderseite in die Bewegungslängsrichtung (X) des Fahrzeugs (10) überstehen kann.

2. Baugruppe (14) nach Anspruch 1, die noch einen Querabschnitt (36) aufweist, der die zwei seitlichen Abschnitte (20A, 20B) untereinander verbindet, wobei der obere Rand (38) der Öffnung (22) von dem unteren Rand (40) des Querabschnitts (36) ausgebildet ist.

3. Baugruppe (14) nach Anspruch 2, bei der der Querabschnitt ein Kühlergrill (36) des Kraftfahrzeugs ist.

4. Baugruppe (14) nach einem der Ansprüche 1 bis 3, bei der der Schild (16) und der Balken (18) dazu bestimmt sind, untereinander derart angeordnet zu werden, dass der Schild (16) den Stoßbalken (18) wenigstens teilweise abdeckt.

5. Baugruppe (14) nach Anspruch 4, bei der der Stoßbalken (18) Lufteintrittsmittel (32) trägt, die eventuell aus einem Stück damit hergestellt sind, wie zum Beispiel ein Lufteintrittsgitter und wobei die Lufteintrittsmittel (32) sich in der Längsrichtung des Fahrzeugs in Bezug zu dem Stoßbalken (18) nach hinten versetzt befinden.

6. Baugruppe (14) nach Anspruch 5, die einen Schild (16) nach Anspruch 3 aufweist, bei der der Kühlergrill (36) die Lufteintrittsmittel (32) des Stoßbalkens (18) teilweise abdeckt.

7. Baugruppe (14) nach einem der vorhergehenden Ansprüche, bei der der Stoßbalken (18) aus einem Kunststoff hergestellt ist.

8. Vorderseite (10) eines Kraftfahrzeugs, die einen Stoßbalken (18), einen Stoßfängerschild (16), ein Chassis (12), an dem der Stoßfängerbalken (18) befestigt ist, und ein Fahrerhaus, das von dem Chassis (12) getrennt ist und von dem Chassis (12) getragen wird, aufweist, **dadurch gekennzeichnet, dass** der Schild (16) und der Balken (18) zu einer Baugruppe nach einem der Ansprüche 1 bis 7 gehören.

9. Vorderseite (10) nach Anspruch 8, die ein Stützelement (24A, 24B) mit mindestens einem Abschnitt (20A, 20B, 36) des Schilds (16) und mindestens ein Element aufweist, das ausgewählt ist aus einem vorderen Scheinwerfereinsatz (26A, 26B) und einem Karosserieteil (28A, 28B) des Kraftfahrzeugs, wobei dieses Stützelement (24A, 24B) an das Fahrerhaus des Fahrzeugs angebaut ist.

10. Kraftfahrzeug, **dadurch gekennzeichnet, dass** es eine Vorderseite (14) nach Anspruch 9 aufweist.

11. Kraftfahrzeug nach Anspruch 10, das ein Nutzfahrzeug ist.

12. Stoßfängerschild (16), **dadurch gekennzeichnet, dass** er zu einer Baugruppe nach einem der Ansprüche 1 bis 7 gehört.
